Europäisches Patentamt

European Patent Office

Office européen des brevets

(19)

(11) **EP 0 859 159 A1**

(12) **DEMANDE DE BREVET EUROPEEN**

(43) Date de publication:
**19.08.1998 Bulletin 1998/34**

(51) Int Cl.6: **F16C 39/06**

(21) Numéro de dépôt: **98400250.1**

(22) Date de dépôt: **05.02.1998**

(84) Etats contractants désignés:
**AT BE CH DE DK ES FI FR GB GR IE IT LI LU MC NL PT SE**
Etats d'extension désignés:
**AL LT LV MK RO SI**

(30) Priorité: **14.02.1997 FR 9701751**

(71) Demandeur: **AEROSPATIALE Société Nationale Industrielle**
**75781 Paris Cédex 16 (FR)**

(72) Inventeur: **Bernus, Christophe**
**75018 Paris (FR)**

(74) Mandataire: **Rinuy, Santarelli**
**14, avenue de la Grande Armée,**
**B.P. 237**
**75822 Paris Cédex 17 (FR)**

(54) **Palier magnétique à amortissement des modes passifs**

(57) Un palier magnétique comporte un circuit magnétique comportant deux pièces polaires parallèles (2) et (3) décalées selon une direction de référence D2, et une pièce polaire de fermeture (4) mobile par rapport aux pièces polaires parallèles et comportant deux tranches délimitant avec celles-ci deux entrefers d'épaisseur variable selon une direction de centrage D1. Ces entrefers et ces tranches s'étendant le long d'une ligne de mouvement relatif (100). Cette pièce polaire de fermeture comporte, entre les tranches 4A et 4B et parallèlement à la ligne de mouvement relatif, une succession discontinue de dents polaires (10) se raccordant chacune à la pièce polaire de fermeture par un moyen de connexion (11) dont au moins un tronçon de liaison est parallèle à la direction de centrage, et est entouré par un élément individuel (12) en matériau électriquement conducteur. Les éléments individuels entourant les tronçons de liaison de deux dents polaires adjacentes quelconques sont disjoints.

Fig.1

## Description

L'invention concerne un palier magnétique semi-actif, c'est-à-dire comportant des circuits magnétiques dans lesquels se combinent des flux générés par des aimants permanents et des flux générés par la circulation de courants dans des bobinages.

Ces circuits magnétiques comportent des pièces polaires réparties entre un corps fixe et un corps mobile et séparées par des entrefers ayant une épaisseur variable selon une direction de centrage. Les flux magnétiques traversant les divers entrefers ménagés entre la pièce fixe et la pièce mobile génèrent des efforts de centrage selon l'axe de centrage, voire selon d'autres axes, qui assurent une suspension sans contact du corps mobile par rapport au corps fixe.

Ces paliers magnétiques semi-actifs à aimants permanents ont un (au minimum) ou plusieurs degrés de liberté contrôlés de manière "active", c'est-à-dire au moyen d'une électronique de commande (asservissement) pilotant le mouvement de la partie suspendue suivant les axes considérés. Il s'agit toujours des axes suivant lesquels les pièces polaires canalisant le flux des aimants se rapprochent ou s'éloignent ; en effet, en l'absence de système de commande, la diminution/augmentation de cet entrefer provoque une augmentation/diminution du flux magnétique agissant de manière à accroître l'effort dans la direction du mouvement. On a donc un effort déstabilisant (raideur négative), que l'on doit rattraper au moyen du système d'asservissement.

Par contre, les axes suivant lesquels tout déplacement de la partie suspendue se traduit par un éloignement tangentiel des pièces polaires provoquent l'apparition d'un effort de rappel passif (raideur positive) ne nécessitant pas de système de commande.

On trouvera des exemples de paliers ci-dessus possédant un, ou deux, "axes actifs" (contrôlés activement) dans les brevets 87-03489 et 82-05190.

Pour tous ces paliers, les axes dits passifs (non contrôlés par un moyen extérieur : asservissement, ...) sont donc rappelés par une raideur positive, mais l'amortissement des mouvements suivant ces axes est généralement très faible (amortissement réduit du mouvement axial de l'ordre de 0.002, pour un palier de type deux axes actifs de $\varnothing$ 140 mm, de raideur axiale 75 N/nm, supportant un rotor de 7 kg.

Le besoin d'un amortissement de ces modes passifs se fait donc sentir dans la plupart des applications des paliers semi-actifs, car les valeurs très faibles habituellement rencontrées conduisent à des surtensions très importantes aux fréquences des modes propres des axes "passifs". Ces surtensions peuvent causer par exemple des déplacement exagérés de la partie suspendue lorsque le palier subit une sollicitation même très faible à la fréquence considérée.

Il a parfois été ajouté aux paliers magnétiques des amortisseurs spécifiques dits "passifs", utilisant des courants de Foucault, pour amortir ces mouvements. Le principe en est très simple : une pièce en cuivre (ou tout autre matériau bon conducteur électrique) portée par l'une des deux parties du palier magnétique (la partie suspendue, ou bien la partie fixe) baigne dans une induction magnétique dont les lignes de flux sont perpendiculaires au mouvement à amortir ; ces lignes de flux sont générées par un aimant et des pièces polaires qui sont portés par l'autre partie du palier. L'inconvénient de ce système est l'encombrement et la masse importante (cuivre, aimant supplémentaire, fer pour canaliser le flux) nécessaires pour arriver à un coefficient d'amortissement intéressant (soit 0.2 pour certaines applications). Le cuivre doit en effet être inséré dans l'entrefer, d'où accroissement de celui-ci et donc réduction de l'induction et de l'efficacité de l'amortisseur.

L'invention a pour objet de pallier les inconvénients précités grâce à une géométrie de palier qui permette un amortissement efficace en ne nécessitant, par rapport à une géométrie classique, que peu de pièces supplémentaires, en sorte que cette fonction d'amortissement n'induise qu'un supplément modéré de poids et d'encombrement, voire de coût.

L'invention propose à cet effet un palier magnétique comportant un circuit magnétique comportant deux pièces polaires parallèles décalées selon une direction de référence, et une pièce polaire de fermeture mobile par rapport aux pièces polaires parallèles et comportant deux tranches délimitant, avec les tranches des pièces polaires parallèles, deux entrefers d'épaisseur variable selon une direction de centrage, ces tranches s'étendant le long d'une ligne de mouvement relatif entre les pièces polaires parallèles, d'une part, et la pièce polaire de fermeture, d'autre part, ce palier étant caractérisé en ce que cette pièce polaire de fermeture comporte, entre les tranches de la pièce polaire de fermeture et parallèlement à la ligne de mouvement relatif, une succession discontinue de dents polaires, chaque dent polaire se raccordant à la pièce polaire de fermeture par un moyen de connexion dont au moins un tronçon de liaison est parallèle à la direction de centrage, chaque tronçon de liaison étant entouré par un élément individuel en matériau électriquement conducteur, les éléments individuels entourant deux tronçons de liaison de deux dents polaires adjacentes quelconques étant disjoints.

On appréciera que l'amortissement réalisé par l'invention utilise les flux magnétiques servant principalement aux fonctions de centrage, et que les modifications structurelles concernent essentiellement le volume situé à l'intérieur de la pièce polaire de fermeture. Il est en pratique avantageux que la dimension de cette pièce polaire de fermeture, parallèlement à la direction de référence, c'est-à-dire parallèlement à l'écartement des pièces polaires disposées en regard, soit supérieure à la dimension correspondante des paliers classiques. Toutefois, même dans ce cas, il n'en découle qu'une augmentation d'encombrement très modérée par rapport à un palier magnétique semi-actif classique. De même le supplément de poids est tout à fait modéré ; en effet aucun aimant permanent supplémentaire n'est nécessaire.

Selon des dispositions préférées de l'invention éventuellement combinées :

- le tronçon de liaison s'étend jusqu'à une portion de fond de cette pièce polaire de fermeture,
- chaque élément individuel en matériau électriquement conducteur s'étend depuis les dents jusqu'à cette portion de fond,
- chaque élément individuel en matériau électriquement conducteur s'étend, parallèlement à la direction de référence, de l'une à l'autre des tranches de la pièce polaire de fermeture,
- chaque élément individuel en matériau électriquement conducteur est massif, - chaque élément individuel en matériau électriquement conducteur est formé d'au moins un enroulement en court-circuit,
- les pièces polaires de fermeture sont concentriques à un axe de rotation parallèle à la direction de centrage, la ligne de mouvement relatif étant circulaire,
- les pièces polaires de fermeture sont annulaires, centrées sur un axe de rotation parallèle à la direction de référence,
- les dents ont, parallèlement à la direction de référence, une dimension supérieure à celle des tronçons de liaison.

Des objets, caractéristiques et avantages de l'invention ressortent de la description qui suit, donnée à titre d'exemple non limitatif, en regard des dessins annexés sur lesquels :

- la figure 1 est une vue schématique partielle d'un palier magnétique conforme à l'invention, en coupe selon la ligne I-I de la figure 2, dans un plan parallèle à la direction de référence et à la direction de centrage,
- la figure 2 en est une vue en coupe selon la ligne II-II de la figure 1, selon une surface s'étendant dans les entrefers,
- la figure 3 est une vue partielle en coupe axiale d'un palier magnétique à centrage axial actif, conforme à l'invention,
- la figure 4 en est une vue en coupe transversale partielle, selon la ligne IV-IV de la figure 3,
- la figure 5 est une vue partielle en coupe axiale d'un palier magnétique à centrage radial actif, conforme à l'invention, et
- la figure 6 est une vue partielle en coupe axiale d'un autre palier magnétique à centrage radial actif, conforme à l'invention.

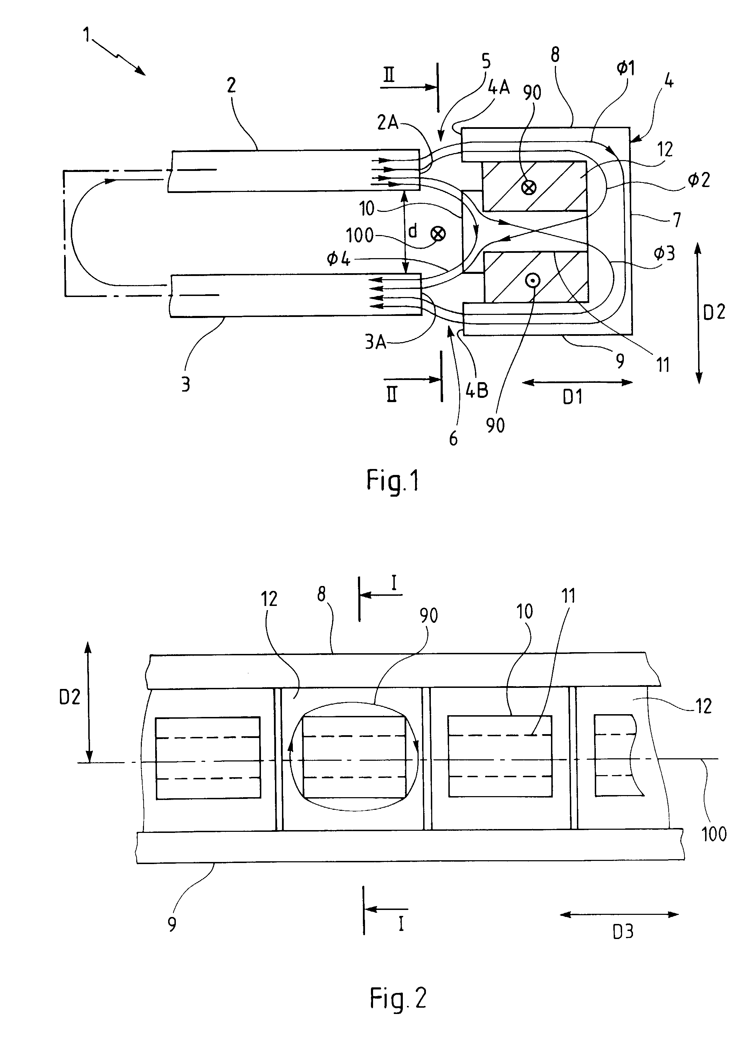

Les figures 1 et 2 représentent conjointement, de façon schématique et partielle, un palier magnétique semi-actif 1 conforme à l'invention.

Il comporte un circuit magnétique comportant deux pièces polaires 2 et 3, par exemple fixes, se raccordant magnétiquement à une pièce polaire de fermeture 4, par exemple mobile, au travers d'entrefers 5 et 6 d'épaisseur variable selon une direction de centrage D1. En variante, la pièce de fermeture peut être fixe tandis que les pièces polaires parallèles sont mobiles.

Les pièces polaires 2 et 3 sont, au moins à proximité des entrefers, parallèles l'une à l'autre, en présentant un décalage fixe d parallèlement à une direction de référence D2 en pratique perpendiculaire à la direction de centrage.

La pièce polaire de fermeture 4 comporte deux tranches 4A et 4B disposés au moins en partie en regard, parallèlement à D1, des tranches 2A et 3A des pièces polaires parallèles 2 et 3. Ces tranches, et donc les entrefers 5 et 6 qu'elles déterminent, s'étendent parallèlement à une ligne 100, rectiligne ou courbe, dont la direction locale est D3. Cette ligne 100 est en pratique localement perpendiculaire à la direction de centrage et à la direction de référence. Il faut noter ici que seule l'orientation de cette ligne peut être définie de façon précise et que sa position est par contre inconnue. Sa position aux figures 1 et 2 n'est donc donnée qu'à titre indicatif.

De façon classique, cette pièce polaire de fermeture 4 a une section en C avec une portion de fond 7 et deux branches 8 et 9 terminées par les tranches 4A et 4B. Toutefois il n'est pas nécessaire que la surface extérieure de cette pièce en C soit matérialisée ; il suffit qu'il y ait une continuité magnétique entre les deux tranches 4A et 4B.

A l'opposé de la pièce polaire de fermeture 4, les pièces polaires parallèles 2 et 3 sont raccordées magnétiquement, éventuellement au travers d'autres entrefers, de toute manière connue appropriée.

En pratique, les pièces polaires 2 et 3, d'une part, et la pièce polaire de fermeture 4, d'autre part, sont raccordées respectivement à deux corps en mouvement relatif, selon un mouvement qui se traduit localement auprès des entrefers par un déplacement parallèlement à la ligne 100.

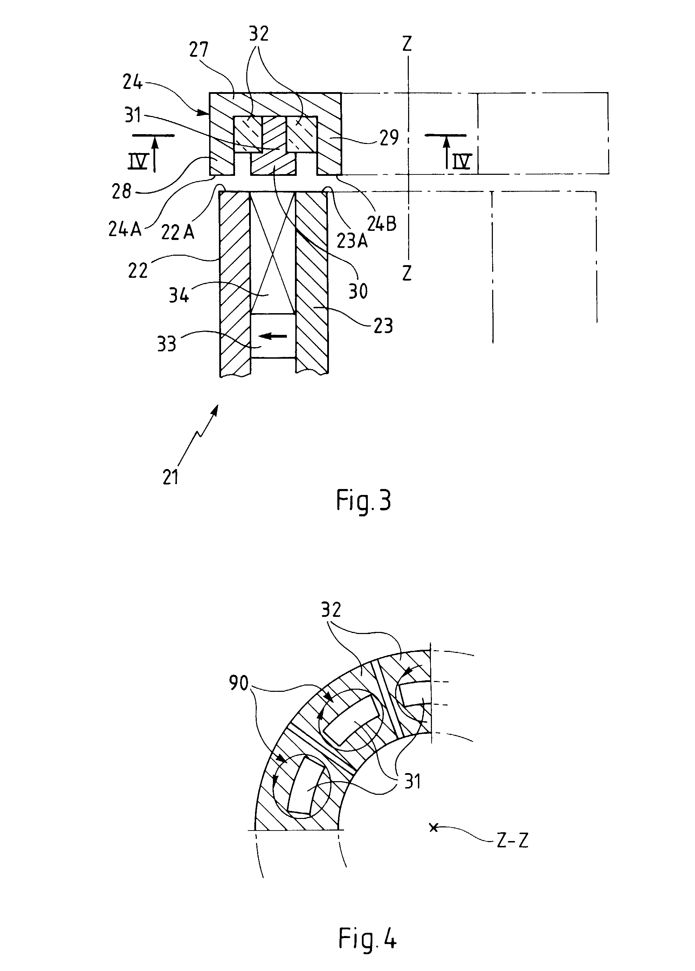

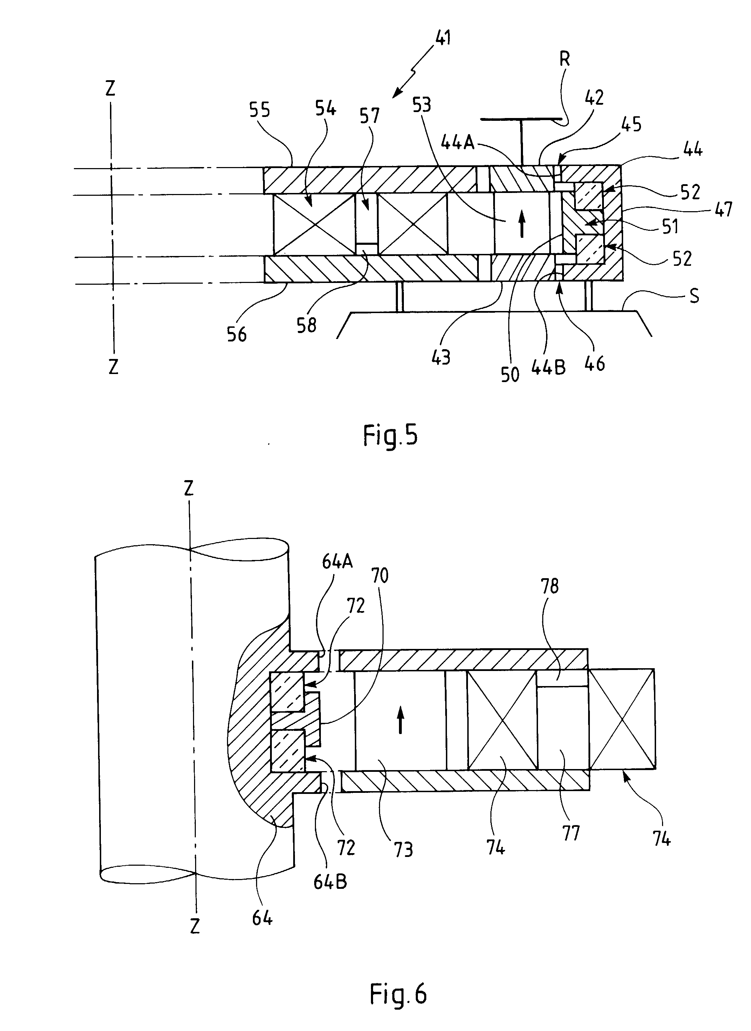

Ce mouvement relatif est le plus souvent un mouvement de rotation, autour d'un axe qui est parallèle, soit à la direction de centrage (cas d'un palier magnétique axialement actif - voir les figures 3 et 4), soit à la direction de référence (cas d'un palier magnétique radialement actif - voir les figures 5 et 6).

Selon l'invention, la pièce polaire de fermeture 4 comporte, entre les tranches 4A et 4B et parallèlement à la ligne 100, une succession discontinue de dents polaires 10, en matériau ferromagnétique, se raccordant chacun à la pièce polaire de fermeture 4, de préférence à sa portion de fond 7, par un élément de connexion 12 dont au moins un tronçon de liaison 11 est parallèle à la direction de centrage, chaque tronçon étant entouré par un élément individuel 12 en matériau électriquement conducteur, par exemple du cuivre.

Les éléments individuels entourant les tronçons de liaison de dents polaires adjacentes sont disjoints. Ces éléments sont ici des blocs massifs de forme globalement parallélépipédique mais peuvent, en variante, avoir une forme de bague à forme extérieure arrondie, ovale ou cylindrique par exemple. Il peut aussi s'agir d'enroulement en court-circuit.

Chaque élément individuel 12 s'étend de préférence depuis les dents 10 jusqu'à la portion de fond 7, et avantageusement de l'une à l'autre des branches 8 et 9

En conséquence, si des lignes de flux viennent à circuler dans un tronçon de liaison 11, leur variation dans le temps génère dans l'élément individuel associé 12 des boucles de courant 90 entourant ce tronçon de liaison 11 et la dissipation de ces boucles de courant induit un effet d'amortissement.

En effet, le flux magnétique circulant dans les pièces polaires 2 et 3 se partage en quatre parties :

- un flux Ø 1 circulant dans les branches 8 et 9 et le fond de la pièce de fermeture,
- un flux Ø 2 circulant dans la branche 8, une partie du fond 7 et dans le tronçon de liaison 11,
- un flux Ø 3 circulant dans ce tronçon de liaison 11, une partie du fond 7 et la branche 9, et
- un flux Ø 4 ne circulant que dans la dent 10, parallèlement à la direction de référence.

Les flux Ø 1 et Ø 4 sont indifférents aux boucles de courant 90 (Ø 1 les entoure complètement, Ø 4 passe en-dessous) tandis que les flux Ø 2 et Ø 3 traversent la boucle et provoquent donc l'apparition de courants circulant dans chaque boucle. Le flux traversant réellement chaque boucle est en réalité, en module, la différence des deux Ø 3-Ø 2.

Lors d'un déplacement relatif de la pièce polaire de fermeture 4, vers le bas, par exemple, le flux Ø 2 augmente (à cause de l'augmentation des surfaces en regard dans l'entrefer dans le circuit parcouru par Ø 2), tandis que le flux Ø 3 diminue (les entrefers vus par le circuit Ø 3 augmentent). On a donc bien une forte variation de Ø 3-Ø 2 d'où l'induction d'un courant circulant dans la boucle 90. Lors d'un déplacement dans l'autre sens, Ø 2 diminue et Ø 3 augmente, Ø 3-Ø 2 varie donc dans l'autre sens que précédemment.

D'après la loi de Lentz, tout courant induit provoque des effets (flux magnétique) s'opposant à la cause qui leur a donné naissance : on a création d'un effort magnétique de freinage du déplacement relatif de la pièce polaire de fermeture 4, et donc du mouvement relatif entre les corps auxquels les pièces polaires 2, 3 et 4 sont fixées, respectivement. La quantification ne pose pas de problème : si l'on sait évaluer la variation de Ø 3-Ø 2 en fonction du déplacement, on en déduit la f.e.m. U dans chaque boucle élémentaire (on suppose dans le calcul qui suit que les pièces polaires admettent un mouvement relatif de rotation autour d'un axe parallèle à l'axe de centrage) :

$$U = d\,(\text{Ø3-Ø2})/dt = d\,(\text{Ø3-Ø2})/dx \cdot dx/dt = d(\text{Ø3-Ø2})/dx \cdot V$$

Connaissant la résistance électrique de la boucle, on en déduit la puissance dissipée par effet Joule ($P = U^2/R$). Un bilan de puissance donne directement la valeur de l'effort radial et permet donc d'en déduire le coefficient de freinage $\alpha$ :

$$P(\text{mécanique}) = P(\text{électrique})$$

$$F(\text{radial}) \times (V(\text{radial}) = U^2/R$$

$$\alpha = F(\text{radial})/V(\text{radial}) = U^2/V^2 R = (d(\text{Ø3-Ø2})/dx)^2/R$$

où P est une puissance,
F est une force,
V est une vitesse.

Par contre, grâce au fait que les éléments individuels associés à des dents polaires voisines sont disjoints, il n'y a pas de couronne électriquement conductrice susceptible de permettre l'apparition de courants induits susceptibles de générer des flux s'opposant aux flux servant au centrage.

Les figures 3 et 4 représentent conjointement, de façon partielle, un palier axialement actif conforme à l'invention.

Ce palier, désigné par la référence 21 dans son ensemble, est formé d'éléments dont les numéros de référence se déduisent de ceux des figures 1 et 2 par addition du nombre 20.

Il comporte deux pièces polaires 22 et 23 localement parallèles, concentriques à un axe Z-Z. Leurs tranches 22A et 23A sont en partie en regard des tranches 24A et 24B d'une couronne polaire de fermeture 24 de section en C avec une jupe radialement externe 28 et une jupe radialement interne 29 reliées par une partie annulaire transversale 27. Entre ces jupes est disposée une série circonférentielle de dents 30 reliées à la partie annulaire 27 par des tronçons axiaux de liaison 31. Tout mouvement radial relatif entre les pièces 22 et 23, d'une part, et la couronne 24, d'autre part, génère dans des blocs 32 des boucles de courant 90 autour des tronçons axiaux, qui induisent un effet d'amortissement.

Un aimant permanent 33 à aimantation radiale génère des lignes de flux auxquelles s'ajoutent ou se retranchent, dans les entrefers, des lignes de flux générées par le passage d'un courant positif ou négatif dans un bobinage 34 coaxial à Z-Z et disposé entre les pièces polaires 22 et 23. En choisissant de façon appropriée le sens et l'amplitude du courant appliqué au bobinage on génère, comme on le sait, des efforts axiaux, ce qui permet un centrage axial.

Le palier 21 est avantageusement symétrique par rapport à un plan transversal passant par l'aimant permanent 33.

Les figures 5 et 6 représentent quant à elles des paliers magnétiques radialement actifs conformes à l'invention (paliers parfois appelés palier 2-axes).

Le palier 41 de la figure 5 est formé d'éléments dont les numéros de référence se déduisent de ceux des figures 1 et 2 par addition du nombre 40.

Ce palier 41 comporte deux pièces polaires annulaires 42 et 43 décalées par rapport à un axe de rotation Z-Z, et entre lesquelles est disposée une couronne aimantée 53 à aimantation axiale.

Les pièces polaires se raccordent magnétiquement, au travers d'entrefers 45 et 46, à une pièce polaire de fermeture 44 et, au travers d'autres entrefers, à deux autres pièces polaires 55 et 56 entre lesquelles est disposé un noyau 57 entouré d'un bobinage 54. Il y a en pratique une cale statique 58 entre ce noyau et l'une des pièces polaires 55 et 56.

Les pièces polaires 42 et 43 sont par exemple solidaires d'un rotor tandis que les pièces polaires 44, 55 et 56 sont solidaires d'un stator.

Entre les branches de la pièce polaire de fermeture 44 est disposée une série circonférentielle de dents 50 raccordées par des tronçons radiaux 51 à la partie de fond 47 de cette pièce polaire de fermeture. Ces tronçons radiaux sont entourés par des éléments individuels 52 en matériau électriquement conducteur.

Ce palier permet d'amortir aussi bien des mouvements axiaux que des mouvements de basculement (lorsque les mouvements ne sont pas identiques tout le long des entrefers annulaires).

La figure 6 est une variante de réalisation du palier de la figure 5 dans laquelle l'aimant et le noyau sont situés entre les mêmes pièces polaires 62 et 63, par exemple fixées à un stator, tandis que la pièce polaire de fermeture 64 fait partie d'un rotor, sans que sa surface extérieure soit matérialisée. Les éléments de ce palier 61 sont désignés par des numéros de référence qui se déduisent de ceux de la figure 5 par addition du nombre 20.

On peut remarquer qu'aux figures 1 à 4 les tranches de la pièce polaire de fermeture s'étendent parallèlement à D1 ou Z-Z sur une plus grande distance que les tranches des pièces polaires parallèles 2 et 3 ou 22 ou 23, il n'en est pas de même aux figures 5 et 6. Cela permet néanmoins d'augmenter le volume disponible pour recevoir les dents magnétiques et les éléments individuels en matériau électriquement conducteur.

Il va de soi que la description qui précède n'a été proposée qu'à titre d'exemple non limitatif et que de nombreuses variantes peuvent être proposées par l'homme de l'art sans sortir du cadre de l'invention.

**Revendications**

1. Palier magnétique comportant un circuit magnétique comportant deux pièces polaires parallèles (2, 3, 22, 23, 42, 43, 62, 63) décalées selon une direction de référence (D2, Z-Z), et une pièce polaire de fermeture (4, 24, 44, 64) mobile par rapport aux pièces polaires parallèles et comportant deux tranches délimitant, avec les tranches des pièces polaires parallèles, deux entrefers d'épaisseur variable selon une direction de centrage (D1), ces entrefers et ces tranches s'étendant le long d'une ligne de mouvement relatif (100) entre des pièces polaires parallèles, d'une part, et la pièce polaire de fermeture, d'autre part, caractérisé en ce que cette pièce polaire de fermeture comporte, entre les tranches (4A, 4B, 24A, 24B, 44A, 44B, 64A, 64B) de la pièce polaire de fermeture et parallèlement à la ligne de mouvement relatif, une succession discontinue de dents polaires (10, 30, 50, 70), chaque dent polaire se raccordant à la pièce polaire de fermeture par un moyen de connexion (11, 31,51, 71) dont au moins un tronçon de liaison est parallèle à la direction de centrage, chaque tronçon de liaison étant entouré par un élément individuel (12, 32, 52, 72) en matériau électriquement conducteur, les éléments individuels entourant les tronçons de liaison de deux dents polaires adjacentes quelconques étant disjoints.

2. Palier magnétique selon la revendication 1, caractérisé en ce que le tronçon de liaison s'étend jusqu'à une portion de fond (7, 27, 47, 67) de cette pièce polaire de fermeture.

3. Palier magnétique selon la revendication 2, caractérisé en ce que chaque élément individuel en matériau électriquement conducteur s'étend depuis les dents jusqu'à cette portion de fond.

4. Palier magnétique selon l'une quelconque des revendications 1 à 3, caractérisé en ce que chaque élément individuel en matériau électriquement conducteur s'étend, parallèlement à la direction de référence, de l'une à l'autre des tranches de la pièce polaire de fermeture.

5. Palier magnétique selon l'une quelconque des revendications 1 à 4, caractérisé en ce que chaque élément individuel en matériau électriquement conducteur est massif.

6. Palier magnétique selon l'une quelconque des revendications 1 à 4, caractérisé en ce que chaque élément individuel en matériau électriquement conducteur est formé d'au moins un enroulement en court-circuit.

7. Palier magnétique selon l'une quelconque des revendications 1 à 6, caractérisé en ce que les pièces polaires de fermeture sont concentriques à un axe de rotation parallèle à la direction de centrage, la ligne de mouvement relatif étant circulaire.

8. Palier magnétique selon l'une quelconque des revendications 1 à 6, caractérisé en ce que les pièces polaires de fermeture sont annulaires, centrées sur un axe de rotation parallèle à la direction de référence.

9. Palier magnétique selon l'une quelconque des revendications 1 à 8, caractérisé en ce que les dents ont, parallèlement à la direction de référence, une dimension supérieure à celle des tronçons de liaison.

Fig.1

Fig.2

Fig. 3

Fig. 4

Fig.5

Fig.6

**Office européen des brevets**

**RAPPORT DE RECHERCHE EUROPEENNE**

Numero de la demande

EP 98 40 0250

## DOCUMENTS CONSIDERES COMME PERTINENTS

| Categorie | Citation du document avec indication, en cas de besoin, des parties pertinentes | Revendication concernee | CLASSEMENT DE LA DEMANDE (Int.Cl.6) |
|---|---|---|---|
| A | WO 97 03301 A (UNITED TECHNOLOGIES CORP.) 30 janvier 1997<br>* page 12, ligne 1 - page 13, ligne 21 *<br>* page 15, ligne 4 - page 16, ligne 19; figures 6-10,14 * | 1-4,7-9 | F16C39/06 |
| A | US 4 683 391 A (HIGUCHI) 28 juillet 1987<br>* le document en entier * | 1-9 | |
| A | US 4 983 870 A (MC. SPARRAN) 8 janvier 1991<br>* le document en entier * | 1-9 | |
| A | US 3 224 818 A (SIXSMITH) 21 décembre 1965<br>* le document en entier * | 1-9 | |

**DOMAINES TECHNIQUES RECHERCHES (Int.Cl.6)**

F16C
H02K

Le présent rapport a été établi pour toutes les revendications

| Lieu de la recherche | Date d'achèvement de la recherche | Examinateur |
|---|---|---|
| LA HAYE | 24 avril 1998 | Geyer, J-L |

CATEGORIE DES DOCUMENTS CITES

X : particulièrement pertinent à lui seul
Y : particulièrement pertinent en combinaison avec un autre document de la même categorie
A : arrière-plan technologique
O : divulgation non-écrite
P : document intercalaire

T : théorie ou principe à la base de l'invention
E : document de brevet antérieur, mais publié à la date de dépot ou apres cette date
D : cité dans la demande
L : cité pour d'autres raisons

& : membre de la même famille, document correspondant

EPO FORM 1503 03.82 (P04C02)